(19) Europäisches Patentamt
European Patent Office
Office européen des brevets

(11) **EP 1 950 882 A2**

(12) **EUROPÄISCHE PATENTANMELDUNG**

(43) Veröffentlichungstag:
**30.07.2008 Patentblatt 2008/31**

(51) Int Cl.:
**H02P 27/08** *(2006.01)*

(21) Anmeldenummer: 08100408.7

(22) Anmeldetag: **14.01.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **26.01.2007 DE 102007004094**

(71) Anmelder: **SIEMENS AKTIENGESELLSCHAFT**
**80333 München (DE)**

(72) Erfinder:
• **Krause, Uwe**
**30982, Pattensen (DE)**
• **Nolte, Uwe**
**30890, Barsinghausen (DE)**
• **Spannberger, Jan**
**30171, Hannover (DE)**

(54) **Verfahren und Vorrichtung zur Steuerung einer mittels Pulsweitenmodulation steuerbaren Drehstrommaschine mit mehreren Phasenwicklungen**

(57) Die Erfindung betrifft ein Verfahren und eine Vorrichtung zur Steuerung einer mittels Pulsweitenmodulation steuerbaren Drehfeldmaschine (2) mit mehreren Phasenwicklungen (n1 bis n3), wobei eine Pulsweitenmodulationssteuerung (28) derart angepasst wird, dass zu einem vorgebbaren Abtastzeitpunkt (t1) eine einzelne der Phasenwicklungen (n1 bis n3) der Drehfeldmaschine (2) angesteuert wird.

FIG 2

EP 1 950 882 A2

**Beschreibung**

Die Erfindung betrifft ein Verfahren und eine Vorrichtung zur Steuerung einer mittels Pulsweitenmodulation steuerbaren Drehfeldmaschine, insbesondere eines Elektromotors, zum Beispiel eines elektronisch kommutierten Wechselstrommotors mit mehreren Phasenwicklungen.

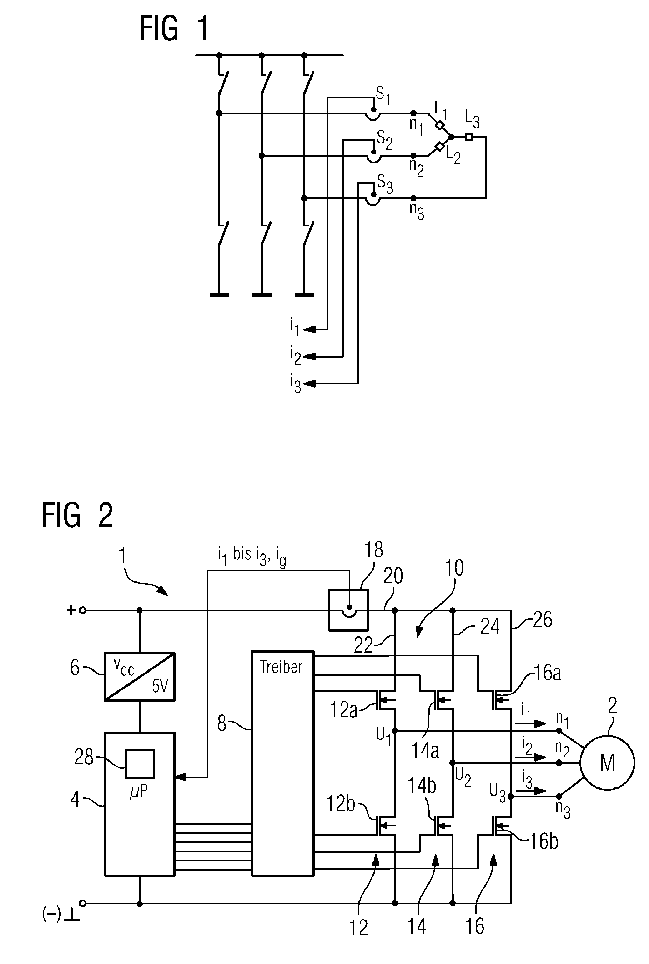

Zur Steuerung von Elektromotoren mit mehreren Phasenwicklungen, in die wechselweise und/oder zeitlich überlappend ein elektrischer Strom eingespeist wird, ist es erforderlich, dass als mindestens eine Betriebsgröße beispielsweise die durch die einzelnen Phasenwicklungen fließenden Ströme erfasst werden. Aus dem Stand der Technik sind verschiedene Messeinrichtungen bekannt, die eine der Anzahl der Phasenwicklungen $n_1$ bis $n_3$ entsprechende Anzahl von Strommesseinrichtungen S1 bis S3 zur Messung von zugehörigen Einzelströmen $i_1$ bis $i_3$ aufweisen, wie dies in Figur 1 zum Stand der Technik schematisch dargestellt ist. Aus Symmetriegründen werden üblicherweise eine gegenüber der Anzahl von Phasenwicklungen um eins reduzierte Anzahl von Strommesseinrichtungen (= n-1) eingesetzt, wobei der fehlende Teilstrom anhand der anderen gemessenen Teilströme einfach bestimmt werden kann. Bedingt durch die erforderliche Anzahl von einzelnen Strommesseinrichtungen und die hohen Kosten der einzelnen Strommesseinrichtungen ist eine derartige Vorrichtung zur Strommessung sehr aufwendig und teuer.

Darüber hinaus ist es aus der DE 102 51 158 A1 bekannt, den Summenstrom aller Einzelströme mittels einer einzelnen Strommesseinrichtung zu erfassen und anschließend mittels einer elektronischen Einheit anhand eines Modells für die Antriebseinheit die elektrischen Ströme in den einzelnen Phasenwicklungen zu berechnen. Derartige Schätzungen anhand von Modellen können zu Fehlern in der Berechnung der Einzelströme führen. Diese Fehler sind bei bestimmten Frequenzen und Lasten des Elektromotors besonders groß.

Der Erfindung liegt daher die Aufgabe zugrunde, ein Verfahren und eine Vorrichtung zur Steuerung einer mittels Pulsweitenmodulation steuerbaren Drehfeldmaschine anzugeben, bei denen Betriebsgrößen, insbesondere Einzelströme der Phasenwicklungen genau, sicher und einfach bestimmt werden können.

Hinsichtlich des Verfahrens wird die Aufgabe erfindungsgemäß gelöst durch die Merkmale des Anspruchs 1 und hinsichtlich der Vorrichtung durch die Merkmale des Anspruchs 11.

Vorteilhafte Weiterbildungen der Erfindung sind Gegenstand der Unteransprüche.

Beim erfindungsgemäßen Verfahren zur Steuerung einer mittels Pulsweitenmodulation steuerbaren Drehfeldmaschine, insbesondere einer Synchronmaschine, eines Elektromotors, z. B. eines Gleichstrom- oder Wechselstrommotors wird eine Pulsweitenmodulationssteuerung derart angepasst, dass zu einem vorgebbaren Abtastzeitpunkt eine vorgegebene Phasenwicklung angesteuert und gespeist wird. Unter dem Abtastzeitpunkt wird insbesondere ein um eine Mittenabtastung innerhalb einer vorgegebenen Schaltperiode synchronisierter Zeitpunkt verstanden. Durch die vorgegebene Ansteuerung einer einzelnen Phasenwicklung der Drehfeldmaschine wird es in einfacher Art und Weise ermöglicht, einzelne Betriebsgrößen der Drehfeldmaschine direkt und ohne aufwendige Modelle zu erfassen und zu bestimmen. Dabei werden durch gezielte Anpassung der Pulsweitenmodulationssteuerung gewünschte Zustände der Drehfeldmaschine eingestellt und deren relevanten Betriebsgrößen, beispielsweise der Strom und/oder die Spannung, erfasst.

Zweckmäßigerweise werden zum vorgegebenen Abtastzeitpunkt die Phase der vorgegebenen Phasenwicklung auf ein vorgegebenes erstes elektrisches Potential und die Phasen der anderen Phasenwicklungen auf ein zweites elektrisches Potential gesteuert. Beispielsweise wird die Phase der vorgegebenen Phasenwicklung, für welche als Betriebsgröße zum Beispiel ein Einzelstrom gemessen werden soll, auf ein so genanntes High-Potential und die Phasen der anderen Phasenwicklungen auf ein so genanntes Low-Potential oder umgekehrt gelegt.

Zweckmäßigerweise wird bei der angepassten Pulsweitenmodulationssteuerung insbesondere bei gleich bleibendem Verhältnis von Einschaltdauer zu Ausschaltdauer die Lage, d.h. die Schaltzeitpunkte, der Einschaltdauer und der Ausschaltdauer der jeweils angesteuerten Phasenwicklung geändert. Beispielsweise werden die Schaltzeitpunkte der Einschaltdauer und der Ausschaltdauer der einzelnen Phasenwicklungen derart eingestellt, dass zum vorgegebenen Abtastzeitpunkt nur eine Phasenwicklung gespeist wird und somit nur durch eine Phasenwicklung ein Strom fließt. Um durch eine derartige Änderung der Lage von Einschaltdauer und Ausschaltdauer der einzelnen Phasenwicklungen nicht die Aussteuerung der Drehfeldmaschine zu beeinflussen, weisen die aus der angepassten Pulsweitenmodulationssteuerung resultierenden pulsweitenmodulierten Signale zur Ansteuerung der Phasenwicklungen vorzugsweise in Summe eine gleich bleibende Einschaltdauer und somit eine gleich bleibende, so genannte Spannungszeitfläche auf. Hierzu wird beispielsweise mindestens ein pulsweitenmodulierten Signal negiert und der zugehörige pulsweitenmodulierte Wert invertiert. Darüber hinaus wird mittels der angepassten Pulsweitenmodulationssteuerung der zugrunde liegende Pulsweitenmodulationszyklus dahingehend unverändert ausgeführt, indem bei gleich bleibendem Verhältnis von Einschaltdauer zu Ausschaltdauer für jede Phasenwicklung die Lage der Schaltzeitpunkte der Einschaltdauer und der Ausschaltdauer verschoben werden. Hierdurch können Korrekturblöcke oder Kompensationszyklen vermieden werden.

Alternativ kann bei einer angepassten symmetrischen Pulsweitenmodulationssteuerung ein pulsweitenmodulierter Zähler mit umgekehrter Zählrichtung und gleichzeitiger Negierung des Ausgangs gesteuert werden.

Vorzugsweise kann für die durch die angepasste Pulsweitenmodulationssteuerung angesteuerte Phasenwicklung mindestens eine Betriebsgröße, insbesondere der Strom und/oder die Spannung, ermittelt werden bzw. wird.

In einer möglichen Ausführungsform wird bevorzugt mittels einer einzelnen Strommesseinrichtung ein Gesamtstrom aller Phasenwicklungen ermittelt und durch die angepasste Pulsweitenmodulationssteuerung mittels dieser Strommesseinrichtung zu dem vorgegebenen Abtastzeitpunkt ein Einzelstrom der angesteuerten Phasenwicklung bestimmt.

Durch die Anordnung einer einzelnen Strommesseinrichtung in einem Schaltungsbereich, in welchem der Summen- oder Gesamtstrom aller Zuleitungen zu allen Phasenwicklungen erfasst werden kann, und durch eine vorgegebene Anpassung der Pulsweitenmodulationssteuerung ist sichergestellt, dass mit nur einer Strommesseinrichtung sowohl der Gesamtstrom aller Phasenwicklungen als auch die Einzelströme in den einzelnen Phasenwicklungen ermittelt werden kann. Dabei werden die Einzelströme messtechnisch direkt und somit ohne Berechnungsmodelle oder Schätzungen erfasst. Durch die Verwendung ein- und derselben Strommesseinrichtung zur Messung von Gesamtstrom und Einzelströmen ist eine besonders kostengünstige Vorrichtung gegeben. Darüber hinaus sind durch die direkte messtechnische Stromerfassung Fehler durch Asymmetrien im Aufbau der Vorrichtung oder durch Berechnungsmodelle oder Schätzungen sicher vermieden.

Je nach eingestelltem Potential wird die Strommesseinrichtung zum Abtastzeitpunkt vom Strom der vorgegebenen Phasenwicklung in positiver oder negativer Richtung durchströmt, wobei die Ströme der anderen Phasenwicklungen die Strommesseinrichtung in umgekehrter Richtung durchströmen. Im Detail ergibt sich beispielsweise bei einem Elektromotor oder -antrieb mit drei Phasenwicklungen der Phasenstrom der einzelnen Phasenwicklung gemäß:

$$i_n = -i_{n+1} - i_{n+2} \quad \text{oder} \quad -i_n = i_{n+1} + i_{n+2}$$

In einer Weiterbildung der Erfindung kann, insbesondere für geberlose Antriebssysteme anhand aller erfassten Einzelströme aller Phasenwicklungen mittels Vektoraddition darüber hinaus die Phasenlage des Stroms und/oder des Rotors ermittelt werden.

Alternativ kann beispielsweise als Betriebsgröße die Spannung der angesteuerten Phasenwicklung ermittelt werden.

Hinsichtlich der erfindungsgemäßen Vorrichtung zur Steuerung eines mittels Pulsweitenmodulation steuerbaren Motors mit mehreren Phasenwicklungen umfasst diese eine Pulsweitenmodulationssteuerung, mittels der zu einem vorgebbaren Abtastzeitpunkt eine einzelnen Phasenwicklung ansteuerbar ist.

Durch eine geänderte, insbesondere gezielte Ansteuerung der Phasenwicklungen der Drehfeldmaschine mittels einer angepassten Pulsweitenmodulationssteuerung ist dann bevorzugt eine der Phasenwicklungen gespeist, so dass beispielsweise zur Betriebsgrößenerfassung eine Strommesseinrichtung den Einzelstrom der betreffenden Phasenwicklung oder eine andere geeignete Sensoreinrichtung eine andere Betriebsgröße, zum Beispiel die Spannung, ermitteln kann. Dabei ist mittels der Pulsweitenmodulationssteuerung zum vorgegebenen Abtastzeitpunkt zweckmäßigerweise nur die vorgegebene Phasenwicklung angesteuert.

In einer weiteren Ausführungsform sind zur Strommessung in Phasenwicklungen der Drehfeldmaschine eine einzelne Strommesseinrichtung zur Ermittlung eines Gesamtstroms aller Phasenwicklungen und die angepasste Pulsweitenmodulationssteuerung vorgesehen, wobei mittels der angepassten Pulsweitenmodulationssteuerung eine vorgegebene einzelne Phasenwicklung derart ansteuerbar ist, dass die Strommesseinrichtung einen Einzelstrom der vorgegebenen Phasenwicklung ermittelt. Hierzu ist die Strommesseinrichtung zweckmäßigerweise in einem Schaltungsbereich der Vorrichtung angeordnet, in welchem der Gesamtstrom aller Zuleitungen zu den Phasenwicklungen ermittelt werden kann.

Darüber hinaus sind mittels der angepassten Pulsweitenmodulationssteuerung zum Abtastzeitpunkt vorzugsweise die Phase der vorgegebenen Phasenwicklung auf ein vorgegebenes erstes elektrisches Potential, z. B. ein High-Potential, und die Phasen der anderen Phasenwicklungen auf ein zweites elektrisches Potential, z. B. ein Low-Potential, stellbar.

Ferner ist mittels der angepassten Pulsweitenmodulationssteuerung die Lage, d.h. die Schaltzeitpunkte von Einschaltdauer und Ausschaltdauer der jeweils angesteuerten Phasenwicklung, steuerbar. Insbesondere weisen die mittels der Pulsweitenmodulationssteuerung erzeugten pulsweitenmodulierten Signale zur Ansteuerung der Phasenwicklungen in Summe eine gleich bleibende Einschaltdauer und somit eine gleich bleibende Spannungszeitfläche auf.

Die erfindungsgemäße Vorrichtung wird insbesondere zur Bestimmung von einzelnen Betriebs- oder Messgrößen, z. B. Einzelströmen in vorgegebenen Phasenwicklungen einer Drehfeldmaschine, insbesondere einer Synchronmaschine oder eines elektronisch kommutierten Motors, verwendet. Vorzugsweise wird dabei ein Computerprogrammprodukt zur Durchführung des Verfahrens verwendet.

Die mit der Erfindung erzielten Vorteile bestehen insbesondere darin, dass mittels einer angepassten Pulsweitenmodulationssteuerung eine einzelne Phasenwicklung zu einem vorgegebenen Abtastzeitpunkt angesteuert wird. Hierdurch können mittels nur einer einzelnen Strommesseinrichtung Einzelströme der jeweils angesteuerten Phasenwicklung direkt messtechnisch erfasst werden. Dabei sind Fehlereinflüsse durch Asymmetrien im Aufbau und/oder durch Modellberechnungen und/oder Schätzungen sicher vermieden.

Ein weiterer wesentlicher Vorteil ist, dass sich die Spannungszeitfläche pro Pulsweitenmodulationszyklus nicht ändert und dass auch keine weiteren Schaltflanken eingefügt werden. Bei einer symmetrischen Pulsweitenmodulationssteuerung und synchronisiertem Abtastzeitpunkt, z. B. Mittenabtastung, lässt sich durch Wahl der Phasenwicklung mit der größten Spannungszeitfläche, d.h. der längsten Einschaltdauer, unmittelbar der Momentanwert der Gesamtstromaufnahme des Systems erfassen. Dies ist z. B. für schnelle Stromregelungen vorteilhaft. Bei einer Anordnung der Strommesseinrichtung im Versorgungszweig (auch High-Zweig genannt) eines Motorsteuergeräts mit Pulsweitenmodulationssteuerung können zudem Brückenkürzschlüsse und Masseschlüsse sicher erkannt werden. Durch Erfassung des Einzelstroms durch Mittenabtastung wird darüber hinaus der Einzelstrom quasi als Mittelwert über eine gesamte Schaltperiode (auch kurz PWM-Periode genannt) erfasst. Dabei ist der gewählte Abtastzeitpunkt bevorzugt frei von Schaltzeitpunkten, so dass durch Schaltvorgänge hervorgerufene Schwingungen und Spannungsspitzen sicher vermieden sind. Ferner ermöglicht die Anpassung der Pulsweitenmodulationssteuerung eine zyklische Erfassung der Einzelströme der Phasenwicklungen, indem die Einzelströme beispielsweise in jeder Schaltperiode erfasst werden. Durch die synchronisierte Mittenabtastung ist der Messwert der Einzelströme frei von so genannten Aliasing-Effekten. Durch die Messung der Phase mit der größten Amplitude, beispielsweise wie oben beschrieben durch Vektoraddition, ergibt sich eine vorteilhafte Ausnutzung des Dynamikbereichs der Strommesseinrichtung.

Ausführungsbeispiele der Erfindung werden anhand einer Zeichnung näher erläutert. Darin zeigen:

FIG 1 schematisch eine Strommessvorrichtung mit einer der Anzahl der Phasenwicklungen zur Ansteuerung eines Elektromotors entsprechenden Anzahl von einzelnen Strommesseinrichtungen nach dem Stand der Technik,

FIG 2 schematisch eine Vorrichtung zur Steuerung einer mittels Pulsweitenmodulation steuerbaren Drehfeldmaschine, insbesondere eines Elektromotors mit mehreren Phasenwicklung und mit einer einzelnen Strommesseinrichtung sowie einer Pulsweitenmodulationssteuerung,

FIG 3 schematisch ein Zeitdiagramm zur Ansteuerung des Motors, umfassend die Impulsfolge von Ein- und Ausschaltvorgängen innerhalb einer Schaltperiode für drei Phasenwicklungen des Elektromotors nach dem Stand der Technik, und

FIG 4 bis 5 schematisch jeweils ein Zeitdiagramm zur Ansteuerung des Elektromotors, umfassend die Impulsfolge von Ein- und Ausschaltvorgängen innerhalb einer Schaltperiode für drei Phasenwicklungen des Elektromotors mit angepasster Pulsweitenmodulationssteuerung zur Erfassung von die jeweilige Phasenwicklung durchlaufenden Einzelströmen.

Einander entsprechende Teile sind in allen Figuren mit den gleichen Bezugszeichen versehen.

Figur 1 zeigt wie oben beschrieben eine Strommessvorrichtung mit einer der Anzahl der Phasenwicklungen $n_1$ bis $n_3$ und Spulen $L_1$ bis $L_3$ entsprechenden Anzahl von einzelnen Strommesseinrichtung S1 bis S3 zur Messung von Einzelströmen $i_1$ bis $i_3$ nach dem Stand der Technik. Alternativ kann auch eine n-1 entsprechende Anzahl von Strommesseinrichtungen S1 bis S3 vorgesehen sein. In diesem Ausführungsbeispiel wird die fehlende n-te Messgröße aus den anderen beiden Messgrößen ermittelt.

In Figur 2 ist eine Vorrichtung 1 zur Ansteuerung einer drei Phasenwicklungen $n_1$ bis $n_3$ umfassenden Drehfeldmaschine 2, z. B. eines Elektromotors (im Weiteren Elektromotor genannt), mittels Pulsweitenmodulation gezeigt. Zur Ansteuerung des Elektromotors 2 ist eine Motorsteuereinheit 4 vorgesehen, die über eine Stromversorgung 6 mit Spannung versorgt wird. Die Motorsteuereinheit 4 ist gegebenenfalls über einen Verstärker 8 und einen Umrichter 10 mit den Phasenwicklungen $n_1$ bis $n_3$ des Elektromotors 2 zu dessen Ansteuerung verbunden. Bei dem Elektromotor 2 kann es sich um eine beliebige elektrische Antriebseinheit, insbesondere um einen elektronisch kommutierten Motor handeln. Die Motorsteuereinheit 4 ist beispielsweise ein Mikroprozessor, ein digitaler Signalprozessor oder eine andere geeignete Datenverarbeitungseinheit zur Motoransteuerung bzw. -kommutierung. Der Verstärker 8 ist beispielsweise ein Signalverstärker. Der Umrichter 10 umfasst, wie in Figur 2 gezeigt, je Phasenwicklung $n_1$ bis $n_3$ einen zugehörigen Schalter 12, 14 und 16. Dabei ist der jeweilige Schalter 12, 14 und 16 aus einem Paar von Schaltelementen 12a, 12b und 14a, 14b und 16a, 16b gebildet. Die Schaltelemente 12a, 12b, 14a, 14b, 16a, 16b sind elektronische Schalter, insbesondere Transistoren, z. B. so genannte MOS-FETs, die ausgangsseitig mit den Phasenwicklungen $n_1$ bis $n_3$ des Elektromotors 2 verbunden sind.

Mittels der Motorsteuereinheit 4 werden die Phasenwicklungen $n_1$ bis $n_3$ des Elektromotors 2 wechselweise und/oder zeitlich überlappend mit einem zugehörigen elektrischen Strom $i_1$ bis $i_3$ (im Weiteren Einzelströme $i_1$ bis $i_3$ genannt) gespeist. Je nach Vorgabe werden verschiedene Betriebsgrößen des Elektromotors 2 erfasst und überwacht. Im Nachfolgenden wird die Erfindung insbesondere anhand der Erfassung des elektrischen Stroms näher beschrieben. Alternativ oder zusätzlich kann die Erfindung auch auf die Erfassung anderer Betriebsgrößen, z. B. der Erfassung der Spannung, angewendet werden.

Für eine genaue Momentenansteuerung des Elektromotors 2 werden als Betriebsgröße diese elektrischen Einzelströme $i_1$ bis $i_3$ erfasst. Hierzu umfasst die Vorrichtung 1 eine einzelne Strommesseinrichtung 18, die bevorzugt in einer Zuleitung 20 der Vorrichtung 1 angeordnet ist, von der die Zuleitungen 22, 24 und 26 zu den Schaltern 12, 14 bzw. 16 der Phasenwicklungen $n_1$ bis $n_3$ abgehen. Somit ist mittels der Strommesseinrichtung 18 der Summen- oder Gesamtstrom ig aller drei Phasenwicklungen $n_1$ bis $n_3$ messbar. Die Zuleitung 20 ist insbesondere eine Versorgungsleitung und im so genannten H-Zweig einer aus den Schaltern 12, 14 und 16 gebildeten Brückenschaltung angeordnet. Hierdurch können mittels der Strommesseinrichtung 18 zusätzlich Brückenkürzschlüsse und Masseschlüsse identifiziert werden. Alternativ oder zusätzlich kann als Betriebsgröße eine andere geeignete Messgröße, z. B. die Spannung, mittels eines Sensors erfasst werden.

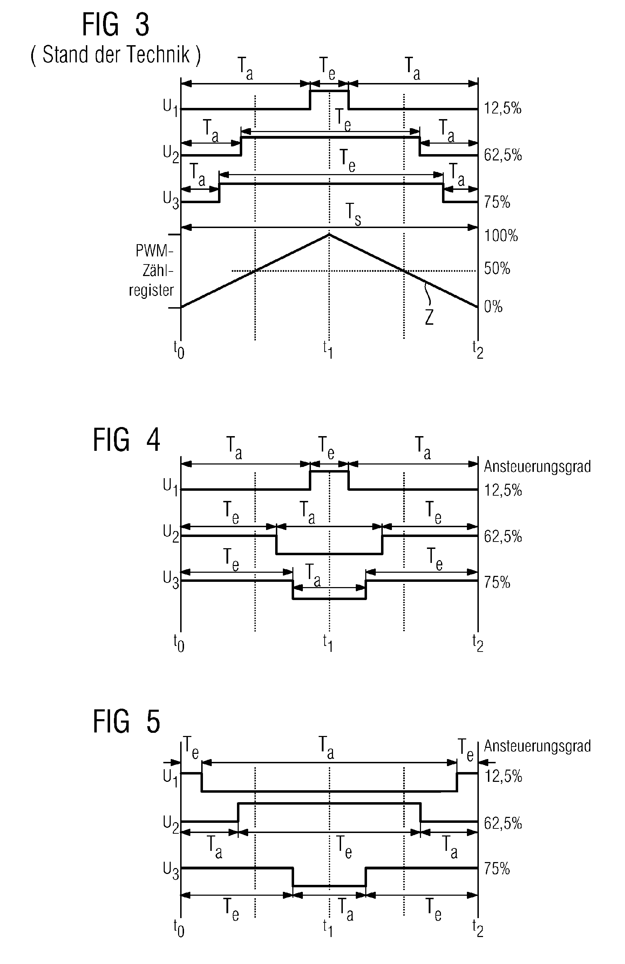

Zur Momentenansteuerung des Elektromotors 2 ist die Erfassung der Einzelströme $i_1$ bis $i_3$ erforderlich. Hierzu ist in die Motorsteuereinheit 4 eine Pulsweitenmodulationssteuerung 28 beispielsweise als ein Computerprogramm oder als eine integrierte Schaltung integriert, welche gegenüber einer herkömmlichen Pulsweitenmodulation derart angepasst ist, dass zu einem vorgegebenen Abtastzeitpunkt $t_1$ eine vorgegebene einzelne Phasenwicklung $n_1$, $n_2$ oder $n_3$ angesteuert wird. Dabei wird mittels der Strommesseinrichtung 18 ein Einzelstrom $i_1$, $i_2$ oder $i_3$ der vorgegebenen Phasenwicklung $n_1$, $n_2$ bzw. $n_3$ ermittelt. In Figur 3 ist beispielhaft ein Zeitdiagramm zur Ansteuerung der drei Phasenwicklungen $n_1$ bis $n_3$ des Elektromotors 2 nach dem Stand der Technik mit einer herkömmlichen Impulsfolge von Einschalt- und Ausschaltvorgängen mit zugehörigen Einschaltdauern Te bzw. Ausschaltdauern Ta innerhalb einer Schaltperiode Ts für drei pulsweitenmodulierte Signale $U_1$ bis $U_3$. Dabei zeigen der Zeitpunkt $t_0$ den Anfang der Schaltperiode Ts, der Zeitpunkt $t_1$ den Abtastzeitpunkt in der Mitte der Schaltperiode Ts und $t_2$ das Ende der Schaltperiode Ts. Darüber hinaus ist zur Verdeutlichung das Verhalten eines Zählsignals Z eines pulsweitenmodulierten Zählregisters aufgezeigt. Aufgrund der gleichen Ansteuerung der pulsweitenmodulierten Signale $U_1$ bis $U_3$ zum Zeitpunkt $t_1$ ist mittels der vorgeschalteten Strommesseinrichtung 18 kein Stromwert messbar. Der Strom, der zu diesem Zeitpunkt fließt, zirkuliert nur innerhalb des Elektromotors 2 und kann nicht von der Strommesseinrichtung 18 erfasst werden, da zu diesem Zeitpunkt alle drei Phasenwicklungen $n_1$, $n_2$ und $n_3$ über die Schalter 12a, 14a und 16a kurzgeschlossen sind. Darüber hinaus ist auf dem rechten, senkrechten Graph der Aussteuerungsgrad der pulsweitenmodulierten Signale $u_1$ bis $u_3$ in Prozent aufgezeigt. Dieser Wert entspricht der relativen Spannungszeitfläche.

Zur Messung der Einzelströme $i_1$ bis $i_3$ wird die Pulsweitenmodulationssteuerung 28 entsprechend einer Vorgabe angepasst und derart gesteuert, dass zum Abtastzeitpunkt $t_1$ nur der Einzelstrom $i_1$ oder $i_2$ oder $i_3$ der vorgegebenen Phasenwicklung $n_1$ oder $n_2$ oder $n_3$ durch die Strommesseinrichtung 18 in positiver oder negativer Richtung fließt. Dies wird erreicht, indem zum Abtastzeitpunkt $t_1$ die Phase der vorgegebenen Phasenwicklung $n_1$, $n_2$ oder $n_3$ auf ein erstes Potential, z. B. High-Potential, und die Phasen der anderen Phasenwicklungen $n_2$, $n_3$ oder $n_1$, $n_3$ oder $n_1$, $n_2$ auf ein zweites Potential, z. B. Low-Potential, gelegt werden. In Figur 4 ist beispielhaft die Phasenwicklung $n_1$ vorgegeben. Zum Abtastzeitpunkt $t_1$ liegt lediglich die Phase der Phasenwicklung $n_1$ auf High-Potential, die Phasen der anderen Phasenwicklungen $n_2$ bis $n_3$ liegen auf Low-Potential. Zum Abtastzeitpunkt $t_1$ bildet sich somit nur der Einzelstrom $i_1$ des pulsweitenmodulierten Signals $u_1$, der die erste Phasenwicklung n1 ansteuert, in der Strommesseinrichtung 18 ab und wird direkt erfasst.

Voraussetzung für eine Anpassung der Pulsweitenmodulationssteuerung 28, ohne dass diese eine Änderung der Aussteuerung des Elektromotors 2 bewirkt, ist, dass die Spannungszeitflächen und somit die Einschaltdauern Te aller pulsweitenmodulierten Signale $u_1$ bis $u_3$ über die gesamte Schaltperiode Ts gleichbleiben. Um dies zu erzielen, werden, wie im Vergleich von den Zeitdiagrammen nach Figur 3 und Figur 4 sowie Figur 5 gezeigt, der Aussteuerungsgrad der Signale $u_1$ bis $u_3$ beibehalten und lediglich die Einschalt- und Ausschaltzeitpunkte und somit die Lage der Einschaltdauer Te und der Ausschaltdauer Ta verschoben.

Dabei kann der jeweils zu messende Einzelstrom $i_1$ bis $i_3$ zum Abtastzeitpunkt t1 einer jeden Schaltperiode Ts und somit zyklisch erfasst werden. Durch den auf die Mitte der Schaltperiode Ts synchronisierten Abtastzeitpunkt $t_1$ ist der ermittelte Messwert des betreffenden Einzelstrom $i_1$ bis $i_3$ von Aliasing-Effekten frei. Darüber hinaus kann durch die Erfassung aller Einzelströme $i_1$ bis $i_3$ aller drei Phasenwicklungen $n_1$ bis $n_3$ durch Vektoraddition die Phasenlage des Rotorstroms und/oder des Rotors bestimmt werden.

In Figur 5 ist gegenüber der Figur 4 die angepasste Pulsweitenmodulationssteuerung 28 zur Erfassung des Einzelstroms $i_2$ der Phasenwicklung n2 dargestellt. In diesem Beispiel liegt analog zur Figur 4 im Mess- oder Abtastzeitpunkt $t_1$ nur das pulsweitenmodulierte Signal $u_2$ an, so dass sich hier der zugehörige Einzelstrom $i_2$ der Phasenwicklung $n_2$ direkt als Gesamtstromaufnahme mittels der Strommesseinrichtung 18 messen lässt.

Darüber hinaus ist in nicht näher dargestellter Art und Weise auch der Einzelstrom $i_3$ der weiteren Phasenwicklung $n_3$ in analoger Weise mittels der einzelnen Strommesseinrichtung 18 durch geänderte Einstellung der Pulsweitenmodulationssteuerung 28 messbar.

**EP 1 950 882 A2**

**Patentansprüche**

1. Verfahren zur Steuerung einer mittels Pulsweitenmodulation steuerbaren Drehfeldmaschine (2) mit mehreren Phasenwicklungen (n1 bis n3), wobei eine Pulsweitenmodulationssteuerung (28) derart angepasst wird, dass zu einem vorgebbaren Abtastzeitpunkt (t1) eine einzelne der Phasenwicklungen ($n_1$ bis $n_3$) der Drehfeldmaschine (2) angesteuert wird.

2. Verfahren nach Anspruch 1, wobei zum Abtastzeitpunkt ($t_1$) die Phase der angesteuerten Phasenwicklung ($n_1$, $n_2$ oder $n_3$) auf ein vorgegebenes erstes elektrisches Potential und die Phasen der anderen Phasenwicklungen ($n_2$, $n_3$; $n_1$, $n_3$ oder $n_1$, $n_2$) auf ein zweites elektrisches Potential gesteuert werden.

3. Verfahren nach Anspruch 1 oder 2, wobei mittels der angepassten Pulsweitenmodulationssteuerung (28), insbesondere bei gleich bleibendem Verhältnis von Einschaltdauer (Te) zu Ausschaltdauer (Ta) der angesteuerten Phasenwicklung ($n_1$ bis $n_3$), der jeweilige Schaltzeitpunkt der Einschaltdauer (Te) und der Ausschaltdauer (Ta) geändert wird.

4. Verfahren nach einem der Ansprüche 1 bis 3, wobei mittels der angepassten Pulsweitenmodulationssteuerung (28) der zugrunde liegende Pulsweitenmodulationszyklus (T) dahingehend unverändert ausgeführt wird, dass das Verhältnis von Einschaltdauer (Te) zu Ausschaltdauer (Ta) für jede Phasenwicklung ($n_1$ bis $n_3$) gleich bleibt.

5. Verfahren nach einem der Ansprüche 1 bis 4, wobei aus der angepassten Pulsweitenmodulationssteuerung (28) resultierende pulsweitenmodulierte Signale ($u_1$ bis $u_3$) zur Ansteuerung der Phasenwicklungen ($n_1$ bis $n_3$) des Motors (2) in Summe eine gleich bleibende Einschaltdauer (Te) aufweisen.

6. Verfahren nach Anspruch 5, wobei mindestens ein pulsweitenmodulierten Signal ($u_1$ bis $u_3$) negiert und der zugehörige pulsweitenmodulierte Wert invertiert wird.

7. Verfahren nach Anspruch 5 oder 6, wobei bei einer angepassten symmetrischen Pulsweitenmodulationssteuerung (28) ein pulsweitenmodulierter Zähler (Z) mit umgekehrter Zählrichtung gesteuert wird.

8. Verfahren nach einem der Ansprüche 1 bis 7, wobei für die angesteuerte Phasenwicklung ($n_1$ bis $n_3$) mindestens eine Betriebsgröße, insbesondere der Strom und/oder die Spannung, ermittelt werden bzw. wird.

9. Verfahren nach einem der Ansprüche 1 bis 8, wobei mittels einer einzelnen Strommesseinrichtung (18) ein Gesamtstrom (ig) aller Phasenwicklungen ($n_1$ bis $n_3$) ermittelt wird und durch die angepasste Pulsweitenmodulationssteuerung (28) mittels dieser Strommesseinrichtung (18) zu dem vorgegebenen Abtastzeitpunkt ($t_1$) ein Einzelstrom ($i_1$, $i_2$ oder $i_3$) der angesteuerten Phasenwicklung ($n_1$, $n_2$ oder $n_3$) ermittelt wird.

10. Verfahren nach Anspruch 9, wobei zum Abtastzeipunkt ($t_1$) die Strommesseinrichtung (18) vom Einzelstrom ($i_1$, $i_2$ oder $i_3$) der angesteuerten Phasenwicklung ($n_1$, $n_2$ oder $n_3$) in positiver oder negativer Richtung durchströmt wird.

11. Verfahren nach einem der Ansprüche 1 bis 10, wobei anhand aller erfassten Einzelströme($i_1$ bis $i_3$) aller Phasenwicklungen ($n_1$ bis $n_3$) mittels Vektoraddition die Phasenlage des Stroms und/oder des Rotors ermittelt wird.

12. Vorrichtung zur Steuerung einer mittels Pulsweitenmodulation steuerbaren Drehfeldmaschine (2) mit mehreren Phasenwicklung ($n_1$ bis $n_3$), umfassend eine Pulsweitenmodulationssteuerung (28), mittels der zu einem vorgebbaren Abtastzeitpunkt ($t_1$) eine einzelne Phasenwicklungen ($n_1$ bis $n_3$) ansteuerbar ist.

13. Vorrichtung nach Anspruch 12, wobei mittels der Pulsweitenmodulationssteuerung (28) zum Abtastzeitpunkt ($t_1$) die Phase der vorgegebenen Phasenwicklung ($n_1$, $n_2$ oder $n_3$) auf ein vorgegebenes erstes elektrisches Potential und die Phasen der anderen Phasenwicklungen ($n_2$, $n_3$ oder $n_1$, $n_3$ oder $n_1$, $n_2$) auf ein zweites elektrisches Potential steuerbar sind.

14. Vorrichtung nach Anspruch 12 oder 13, wobei mittels der Pulsweitenmodulationssteuerung (28) bei gleich bleibendem Verhältnis von Einschaltdauer (Te) zu Ausschaltdauer (Ta) der angesteuerten Phasenwicklung ($n_1$ bis $n_3$) der Schaltzeitpunkt der Einschaltdauer (Te) und/oder der Ausschaltdauer (Ta) steuerbar ist.

15. Vorrichtung nach einem der Ansprüche 12 bis 14, wobei mittels der Pulsweitenmodulationssteuerung (28) erzeugte

pulsweitenmodulierte Signale ($u_1$ bis $u_3$) zur Ansteuerung der Phasenwicklungen ($n_1$ bis $n_3$) in Summe eine gleich bleibende Einschaltdauer (Te) aufweisen.

16. Vorrichtung nach einem der Ansprüche 12 bis 15, wobei zur Erfassung mindestens einer Betriebsgröße eine Strommesseinrichtung (18) zur Ermittlung eines Gesamtstroms ($i_g$) aller Phasenwicklungen ($n_1$ bis $n_3$) vorgesehen ist, und diese Strommesseinrichtung (18) zum vorgegebenen Abtastzeitpunkt ($t_1$) den Einzelstrom ($i_1$, $i_2$ oder $i_3$) der angesteuerten Phasenwicklung ($n_1$, $n_2$ oder $n_3$) ermittelt.

17. Vorrichtung nach Anspruch 16, wobei zum Abtastzeitpunkt ($t_1$) die Strommesseinrichtung (18) vom Einzelstrom ($i_1$, $i_2$ oder $i_3$) der angesteuerten Phasenwicklung ($n_1$, $n_2$ oder $n_3$) in positiver oder negativer Richtung durchströmbar ist.

18. Vorrichtung nach einem der Ansprüche 12 bis 17, wobei die Drehfeldmaschine (2) eine Synchronmaschine oder ein Gleichstrommotor ist.

19. Verwendung einer Vorrichtung nach den Ansprüche 12 bis 18 zur Bestimmung von Einzelströmen ($i_1$ bis $i_3$) in Phasenwicklungen ($n_1$ bis $n_3$) einer Drehfeldmaschine (2), z. B. eines elektronisch kommutierten Motors.

20. Computerprogrammprodukt zur Durchführung des Verfahrens nach einem der Ansprüche 1 bis 11.

## FIG 1

## FIG 2

## FIG 3
( Stand der Technik )

## FIG 4

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10251158 A1